# FASCICULE DE BREVET EUROPEEN

(11) **EP 1 756 019 B1**
(45) Date de publication et mention de la délivrance du brevet: **09.02.2011**
(21) Numéro de dépôt: 05773016.0
(22) Date de dépôt: 18.05.2005
(51) Int. Cl.: C04B 35/565, C25C 3/08

(54) **COMPOSITION DE BASE POUR LA FABRICATION D"OBJETS REFRACTAIRES FACONNES A BASE DE SIC ET PROCEDE DE FABRICATION D'OBJETS MOULES CORRESPONDANTS**
BASISZUSAMMENSETZUNG ZUR HERSTELLUNG REFRAKTÄRER FORMPRODUKTE AUF SIC-BASIS UND HERSTELLUNGSVERFAHREN DAFÜR
BASE COMPOSITION FOR PRODUCING SHAPED REFRACTORY OBJECTS BASED ON SIC AND METHOD FOR THE PRODUCTION THEREOF

(30) Priorité: 18.05.2004 FR 0405445
(43) Date de publication de la demande: 28.02.2007
(73) Titulaire: Etablissements Haasser Produits Refractaires (Société à responsabilité limitée), 67620 Soufflenheim (FR)
(72) Inventeur: HAASSER, André, F-67620 Soufflenheim (FR); LAMBS, Thierry, F-67500 Haguenau (FR)
(74) Mandataire: Nuss, Pierre
(86) Numéro de dépôt international: PCT/FR2005/001247
(87) Numéro de publication internationale: WO 2005/121043

(56) Documents cités:
- EP-A- 0 222 389
- DE-A- 2 912 443
- US-A- 3 836 673
- US-A- 5 560 809

## Description

La présente invention concerne le domaine de la fabrication de produits façonnés réfractaires, plus précisément celui de la fabrication d'objets réfractaires à base de carbure de silicium SiC et spécialement celui de la fabrication de briques ou de dalles moulées à hautes teneur en SiC, en particulier de briques ou dalles destinées à être utilisées dans la fabrication de cuves électrolytiques telles que celles employées dans la fabrication de l'aluminium par voie électrolytique.

Elle a pour objet une composition de base, c'est-à-dire un pré-mélange sous forme de poudre particulièrement utile dans la mise en oeuvre du processus de fabrication desdits objets ou produits façonnés, de préférence moulés, en SiC. Elle a également pour objet un procédé de fabrication d'un objet moulé réalisé à base de carbure de silicium ainsi que l'utilisation des produits obtenus dans l'industrie, en particulier dans la fabrication ou le revêtement de cuves électrolytiques servant à la fabrication de l'aluminium par voie électrolytique.

Au cours de ce procédé, la réduction de l'alumine (Al₂O₃) en métal (Al) s'effectue dans des cuves d'électrolyse traversées par un courant continu. Lesdites cuves sont généralement réalisées sous la forme de caissons d'acier rectangulaires revêtus latéralement de briques réfractaires à base de SiC et dont les blocs de carbone constituant le fond desdites cuves forment la cathode. Elles renferment un électrolyte en fusion dans lequel l'alumine est dissoute et qui est constitué en grande partie de cryolithe (Na₃AlF₆) et d'une quantité beaucoup plus faible de fluorine (CaF₂).

Au cours des dernières années, des matériaux réfractaires à base de SiC lié nitrure (Si₃N₄) ont été de plus en plus utilisés dans le revêtement des parois latérales des cuves d'électrolyse en remplacement des matériaux traditionnels à base de SiC et/ou de carbone.

Toutefois, la phase de nitrure de Silicium (Si₃N₄) servant de liant dans les matériaux connus en SiC résiste mal aux effets corrosifs de la cryolithe et des gaz agressifs, en particulier NaAlF₄, qui se forment lors du processus d'électrolyse conduisant ainsi à une dégradation excessive desdites parois qui nécessitent de fastidieuses et onéreuses opérations de réparation ou de remplacement.

Il existe donc un réel besoin de fournir un matériau réfractaire pouvant être façonné en brique, dalle ou analogue permettant de fabriquer des parois de cuves ou un revêtement de ces dernières qui soit plus résistant aux agents chimiques agressifs, en particulier au fluor ou aux dérivés fluorés, et plus particulièrement la cryolithe, présents dans les bains électrolytiques utilisés dans la production d'aluminium tout en présentant des propriétés mécaniques suffisantes, de préférence au moins équivalentes et plus préférentiellement supérieures, à celles des matériaux connus ainsi que des coûts de revient acceptables.

Pour répondre à ce besoin, la titulaire a mis au point une composition de base spécifique sous la forme d'une poudre qui permet d'obtenir, grâce également à un nouveau procédé de fabrication, un produit ou objet réfractaire moulé à haute teneur en SiC et dont la résistance auxdits agents chimiques susvisés est grandement améliorée à celle du même objet réalisé en SiC nitruré connu et dont les autres propriétés physiques ou mécaniques sont au moins équivalentes voire meilleures à celles des matériaux actuellement employés.

En particulier, les produits selon l'invention présentent une teneur globale en SiC (sous forme α et/ou β) nettement supérieure à celles des matériaux connus, à savoir des teneurs supérieures à 95 % en poids contre des teneurs habituelles comprises entre 74 % et 78 % en poids pour des SiC liés au nitrure Si₃N₄.

La présente invention a donc pour objet une composition de base pour la fabrication de produits façonnés réfractaires à base de carbure de silicium SiC, caractérisée en ce qu'elle contient, en poids,
- de 4% à 8% d'une poudre de silicium métallique présentant une granulométrie inférieure ou égale à 10 µm,
- au moins 3 % d'une poudre d'aluminium métallique présentant une granulométrie inférieure à 45 µm, et
- au moins 85 % d'une poudre de carbure de silicium α-SiC, la somme de ces trois constituants représentant 100 %, la teneur globale en éventuelles impuretés étant au maximum de 0,5 % en poids.

L'invention a également pour objet un procédé de fabrication d'un objet moulé réalisé à base de carbure de silicium, caractérisé en ce qu'il comprend essentiellement les étapes consistant à :
- mettre à disposition une composition de base poudreuse selon l'invention,
- ajouter à ladite composition de base poudreuse, un composé liant (de préférence organique) carboné liquide susceptible de transformer le silicium métallique de ladite composition en carbure de silicium SiC, de préférence en β-SiC, lors du traitement thermique approprié subséquent, mélanger les composants et laisser reposer le mélange homogène obtenu jusqu'à l'obtention d'un mélange pâteux apte à être mis en forme ultérieurement par pressage,
- transférer ledit mélange pâteux dans un moule et presser progressivement ledit mélange sous une pression de pressage maximale comprise entre 500 et 1500 kg/cm², pour obtenir l'objet moulé souhaité, en procédant au moins à un premier dégazage lorsque la pression de pressage atteint 1/3 de la valeur de ladite pression maximale et à un second dégazage lorsque la pression de pressage atteint 2/3 de la valeur de ladite pression maximale,
- étuver l'objet pressé obtenu à une température comprise entre 150 °C et 300 °C, pendant au moins 4 heures,
- soumettre l'objet étuvé à un traitement thermique sous atmosphère réductrice ou inerte à une température d'au moins 1350 °C afin de transformer la totalité ou quasi-totalité du silicium métallique en SiC par réaction avec ledit composé organique carboné.

La présente invention permet d'obtenir un produit façonné, en particulier une brique ou dalle réfractaire moulée, à base de carbure de silicium susceptible d'être obtenu par la mise en oeuvre du procédé selon l'invention, caractérisé en ce qu'il présente :
- une teneur totale en SiC d'au moins 95 % en poids,
- une densité apparente supérieure à 2,50 g/cm³,
- une porosité inférieure à 18 %, et
- une résistance à l'écrasement à froid d'au moins 100 N/mm².

Le produit obtenu par la mise en oeuvre du procédé selon l'invention peut être utilisé pour la fabrication de briques ou de dalles réfractaires, en particulier pour la fabrication de briques ou de dalles réfractaires utilisables dans la construction de cuves électrolytiques employées dans la fabrication de l'aluminium par électrolyse.

L'invention sera mieux comprise, grâce à la description ci-après, qui se rapporte à des modes de réalisation préférés, donnés à titre d'exemples non limitatifs.

Conformément à l'invention, la composition de base pour la fabrication de produits façonnés réfractaires à base de carbure de silicium SiC est caractérisée en ce qu'elle contient, en poids,
- de 4% à 8% d'une poudre de silicium métallique présentant une granulométrie inférieure ou égale à 10 µm,
- au moins 3 % d'une poudre d'aluminium métallique présentant une granulométrie inférieure à 45 µm, et
- au moins 85 % d'une poudre de carbure de silicium α-SiC, la somme de ces trois constituants représentant 100 %, la teneur globale en éventuelles impuretés étant au maximum de 0,5 % en poids.

En effet, la demanderesse a constaté de manière surprenante et inattendue que la présence d'une quantité spécifique d'aluminium métallique dans la composition de base permettait d'obtenir des produits finis à base de SiC présentant les propriétés chimiques et physiques recherchées tout en restant apte à une mise en oeuvre industrielle pratique et économiquement rentable.

De manière avantageuse, la poudre de silicium métallique présente une granulométrie moyenne comprise entre 6 µm et 7 µm.

La variété α-SiC employée en tant que matière première dans la composition de base est actuellement la plus facilement accessible industriellement et donc préférée même si cette dernière peut être remplacée, en tout ou en partie, par la variété β-SiC dont les propriétés physico-chimiques sont très voisines, voire pour certaines identiques.

De manière encore plus préférée, la composition de base selon l'invention est caractérisée en ce qu'elle contient, en poids,
- 6 % d'une poudre de silicium métallique présentant une granulométrie inférieure à 10 µm,
- 3 % d'une poudre d'aluminium métallique présentant une granulométrie inférieure à 45 µm, et
- 91 % d'une poudre de carbure de silicium α-SiC, dont la granulométrie est répartie de la manière suivante, en poids :
   - 38 % de α-SiC ayant une granulométrie comprise entre 1 mm (exclu) et 3 mm (inclus),
   - 27 % de α-SiC ayant une granulométrie comprise entre 0,2 mm (exclu) et 1 mm (inclus), et
   - 26 % de α-SiC ayant une granulométrie comprise entre 0 mm (exclu) et 0,2 mm (inclus).
la somme de ces trois constituants représentant 100 %, la teneur globale en éventuelles impuretés étant au maximum de 0,5 % en poids.

Une telle répartition granulométrique particulièrement préférée permet d'obtenir une compacité optimale du produit fini et donc une porosité ouverte particulièrement faible ce qui, à son tour, garantit des propriétés physico-chimiques particulièrement bonnes.

Lesdites compositions peuvent être livrées par sacs de diverses tailles et directement utilisées par l'industriel grâce au procédé selon l'invention dans lequel ces dernières sont la matière brute de départ.

Il suffit ensuite d'ajouter à cette composition de base une substance contenant suffisamment de carbone, telle qu'une matière organique, par exemple une résine ou un polymère carboné, afin de transformer, lors d'une étape de cuisson ultérieure, une quantité maximale de silicium métallique en carbure de silicium sous la forme α-SiC, β-SiC ou d'un mélange des deux, en fonction notamment de la température de cuisson.

Il va de soi que l'homme du métier peut calculer sans difficulté la quantité exacte de carbone à fournir à une quantité donnée de poudre de la composition de base, notamment en fonction de la teneur en carbone contenue dans la substance ajoutée afin de fournir au moins la quantité théoriquement nécessaire à une conversion complète de tout le silicium en SiC.

De même, la température du four utilisé à l'étape de cuisson traditionnellement présente dans un procédé de fabrication de produits façonnés réfractaires peut être déduite par l'homme du métier en fonction des produits organiques mis en oeuvre.

Afin de réaliser plus facilement les produits réfractaires manufacturés souhaités, la demanderesse a mis au point un procédé de fabrication particulièrement avantageux qui permet de bénéficier au maximum de tous les avantages de la composition de base conforme à l'invention.

De manière surprenante et inattendue, le procédé développé permet de produire de façon particulièrement pratique, fiable et économique les produits réfractaires les plus couramment rencontrés dans l'industrie, à savoir des objets réfractaires moulés et notamment de briques et de dalles réfractaires formées par pressage.

La présente invention a donc également pour objet un procédé de fabrication d'un objet moulé réalisé à base de carbure de silicium, caractérisé en ce qu'il comprend essentiellement les étapes consistant à :
- mettre à disposition une composition de base poudreuse selon l'invention,
- ajouter à ladite composition de base poudreuse, un composé liant (de préférence organique) carboné liquide susceptible de transformer le silicium métallique de ladite composition en carbure de silicium SiC, de préférence en β-SiC, lors du traitement thermique approprié subséquent, mélanger les composants et laisser reposer le mélange homogène obtenu jusqu'à l'obtention d'un mélange pâteux apte à être mis en forme ultérieurement par pressage,
- transférer ledit mélange pâteux dans un moule et presser progressivement ledit mélange sous une pression de pressage maximale comprise entre 500 et 1500 kg/cm², pour obtenir l'objet moulé souhaité, en procédant au moins à un premier dégazage lorsque la pression de pressage atteint 1/3 de la valeur de ladite pression maximale et à un second dégazage lorsque la pression de pressage atteint 2/3 de la valeur de ladite pression maximale,
- étuver l'objet pressé obtenu à une température comprise entre 150 °C et 300 °C, pendant au moins 4 heures,
- soumettre l'objet étuvé à un traitement thermique sous atmosphère réductrice ou inerte à une température d'au moins 1350 °C afin de transformer la totalité ou quasi-totalité du silicium métallique en SiC par réaction avec ledit composé carboné.

La composition de base selon l'invention permet donc d'utiliser un procédé de fabrication dans lequel la température de cuisson est avantageusement basse pour ce type de produit, ce qui a pour effet, notamment, de diminuer considérablement le prix de revient des objets fabriqués.

Selon une autre caractéristique avantageuse, le procédé selon l'invention est caractérisé en ce que le composé liant carboné liquide est un mélange d'une résine phénolique liquide, de préférence une résine phénol-formaldéhyde de type connu sous la dénomination « novolaque » avec au moins un agent de réticulation dudit liant, de préférence de la hexaméthylène tétramine (HTMA).

Bien entendu tous les autres agents de réticulation (ou de polymérisation) compatibles habituellement mis en oeuvre dans ce genre d'application peuvent être utilisés.

De manière préférée, on ajoute, en mélangeant dans un premier temps, une première résine phénolique liquide à ladite composition de base, puis dans un second temps le ou les agents de réticulation, éventuellement en mélange avec une seconde résine phénolique compatible ou identique à la première, tous deux sous forme de poudres solides, en poursuivant le mélange des différents composants.

De façon particulièrement préférée, la première résine phénolique est une résine connue sous la dénomination commerciale « PREFERE 88 5912R» et la seconde résine contenant l'agent de réticulation est connue sous la dénomination commerciale « PERACIT 8160R », toutes les deux étant distribuées par la société DYNEA ERKNER GmbH (Allemagne).

Selon une autre caractéristique, le procédé selon l'invention est en outre caractérisé en ce que la pression maximale de pressage est d'environ 1000 kg/cm² et en ce que l'objet moulé est étuvé pendant au moins 4 heures à une température comprise entre 150 °C et 170 °C avec une montée en température de 10 °C/heure.

Une telle montée en température progressive permet d'obtenir un séchage progressif et uniforme sans créer de tensions pouvant conduire à des défauts (fissures, zones de contrainte...) ou des inhomogénéités structurelles ou de composition.

Selon une variante, le mélange pâteux obtenu après l'adjonction du composé (organique) carboné liant liquide est extrudé selon la forme souhaitée dans une extrudeuse classique avant d'être mis à reposer, si nécessaire, et avant d'être étuvé puis traité thermiquement dans les mêmes conditions que ci-dessus.

De manière avantageuse, le traitement thermique se fait pendant au moins une heure à une température de 1360 °C et sous une atmosphère d'argon.

D'autres atmosphères inertes (azote...) ou réductrices (CO, CO₂) peuvent également convenir.

La présente invention a également pour objet un produit façonné, en particulier brique ou dalle réfractaire moulée, à base de carbure de silicium susceptible d'être obtenu par la mise en oeuvre du procédé selon l'invention caractérisé en ce qu'il présente :
- une teneur totale en SiC d'au moins 95 % en poids,
- une densité apparente supérieure à 2,50 g/cm³,
- une porosité inférieure à 18 %, et
- une résistance à l'écrasement à froid d'au moins 100 N/mm².

La densité apparente et la porosité (ouverte) mentionnées dans le cadre de la présente invention sont mesurées de manière classique selon la norme française NF B40-321 (mai 1995) alors que la résistance à l'écrasement à froid est définie d'après la norme française NF B40-328 (mars 1999). La résistance aux agents chimiques a été appréciée en plongeant un échantillon du matériau à analyser dans une solution d'acide fluorhydrique (HF) concentrée (37% en vol.) à température ambiante et en observant les effets sur l'échantillon au microscope après un temps donné. Les produits selon l'invention présentent ainsi une résistance à HF d'au moins 50 heures, c'est-à-dire que les propriétés mécaniques principales du matériau restent tout à fait acceptables, passé ce temps d'immersion.

Par ailleurs, la présente invention a encore pour objet l'utilisation d'un produit façonné selon l'invention ou obtenu par la mise en oeuvre du procédé conforme à la présente invention pour la fabrication de briques ou de dalles réfractaires, en particulier pour la fabrication de briques ou de dalles réfractaires utilisables dans la construction de cuves électrolytiques employées dans la fabrication de l'aluminium par électrolyse.

Ainsi, l'invention permet la fabrication d'un produit ou « qualité » à base de grains α-SiC liés par une matrice de β-SiC et un élément métallique.

En effet, lors de la cuisson à la température préférée de 1360 °C, le liant organique précédemment réticulé brûle et disparaît en faisant place à du carbure de silicium fraîchement formé grâce au silicium métallique contenu dans la composition de base qui se combine au carbone organique dudit liant. A cette température la variété de SiC formée est principalement du β-SiC, sans que l'on veuille ici invoquer ou se limiter à une quelconque théorie. A des températures plus élevées, en particulier au-dessus d'environ 2200 °C, la variété α-SiC est formée en priorité et la variété β-SiC éventuellement présente a également tendance à se transformer en variété α-SiC sans que ceci ne nuise de manière décisive au produit final obtenu.

L'invention sera maintenant décrite à l'aide d'un exemple pratique non limitatif.

### Exemple : Préparation de briques réfractaires à haute teneur en SiC

### 1. Préparation du mélange de base

Le mélange de base (composition de base) est constitué par une association de différents grains de α-SiC, de silicium métallique et d'aluminium métallique.

La granulométrie utilisée pour les différentes poudres solides mélangées est, en poids :

| | |
|---|---|
| α-SiC 1 à 3 mm : | 38% |
| α-SiC 0,2 à 1 mm : | 27 % |
| α-SiC 0 à 0,2 mm : | 26 % |
| Si métal < 10 µm : | 6 % |
| Al métal < 45 µm : | 3 % |

On a ainsi préparé 4 kg de la composition de base en mélangeant, de façon homogène, les quantités de poudres suivantes : 1,52 kg de α-SiC (1 à 3 mm), 1,08 kg de α-SiC (0,2 à 1 mm), 1,04 kg de α-SiC (0 à 0,2 mm), 0,24 kg de Si métal (< 10 µm) avec 0,12 kg de Al métal (< 45 µm) dans un récipient pendant 5 minutes, puis on a ajouté à ce mélange 5 % de résine phénolique liquide (soit 200 g de solution de résine « 5912R » également connue sous la dénomination commerciale « PREFERE 88 5912R » de la société DYNEA ERKNER Industrial Resins GmbH (Allemagne)) et on mélange à nouveau environ 5 minutes jusqu'à l'obtention d'une pâte homogène.

La résine phénolique liquide employée a, de préférence, une viscosité (ISO 3219) comprise entre 1700 mPa.s et 2200 mPa.s à 20°C, un taux en matières sèches (« dry content ») de 69 ± 2 %, une teneur en phénol libre (ISO 8974) inférieure à 1 % et s'utilise avec du HTMA (5-15 % sur la base des matières solides) à une température inférieure à 90°C ou avec une résine comprenant déjà du HTMA.

Dans cet exemple on choisit d'ajouter 1 % de résine phénolique en poudre (soit 40 g de résine « 8160R » solide également connue sous la dénomination commerciale « PERACIT 8160R » de la société DYNEA ERKNER Industrial Resins GmbH (Allemagne)).

La résine phénolique solide employée a, de préférence, une longueur de coulée (« flow length ») de 35 mm ± 10 mm (ISO 8619), une teneur en hexamine de 9,0 ± 0,8 %, une teneur en phénol libre (ISO 8974) inférieure à 1 %, une teneur en eau inférieure à 1 % (ISO 760) et s'utilise à une température comprise entre environ 160 et 190 °C.

On laisse suffisamment reposer le mélange avant utilisation pour le pressage, afin de permettre la réaction entre la résine liquide et l'agent de réticulation contenu dans la résine en poudre jusqu'à l'obtention d'une pâte homogène présentant une viscosité adaptée à l'utilisation souhaitée.

Afin d'éviter que le mélange ne durcisse de trop (ce qui le rendrait inutilisable), ledit mélange doit être utilisé dans un temps relativement court (dans l'exemple 24 h au plus) après sa préparation.

### 2. Pressage

Le pressage a lieu sur une presse hydraulique conventionnelle. La pression maximale appliquée est d'environ 500 à 1 000 kg/cm². Il est nécessaire d'appliquer des dégazages lors de la phase de pressage, de préférence à 1/3 et 2/3 de la pression maximale, ce afin d'éliminer toutes les bulles d'air présentes dans le mélange.

### 3. Séchage / Etuvage

Avant étuvage, on laisse reposer les briques moulées obtenues par pressage environ 48 h à l'air libre. L'étuvage a lieu à 150-170°C pendant 4 h avec une montée en température de 10°C/heure. Cette étape permet notamment d'achever la réticulation initiée par l'agent de réticulation dans la résine phénolique et d'éliminer les restes de solvants de la résine phénolique liquide.

### 4. Cuisson

Le but de la cuisson est de faire réagir le Si métallique avec le carbone apporté par les résines précitées. Cette réaction est réalisée dans une atmosphère dépourvue d'oxygène, de préférence dans une atmosphère inerte ou réductrice.

Dans l'exemple décrit, la cuisson est réalisée à 1 360°C sous atmosphère d'argon.

### 5. Caractéristiques des briques obtenues

Les briques parallélépipédiques obtenues ont présenté les caractéristiques suivantes :

| | |
|---|---|
| Teneur totale en SiC : | 97 % en poids |
| Densité apparente : | 2,55 g/cm³ |
| Porosité ouverte : | 14-15 % |
| Résistance à l'écrasement à froid : | 110 N/mm² |

Les briques obtenues ont passé avec succès le test (défini plus haut) à l'acide fluorhydrique concentré, ce même après plusieurs jours (voire semaines) de trempage de la brique.

Le mélange formé par deux résines et surtout l'ajout de l'aluminium donnent également une meilleure résistance à la compression à froid et une amélioration des conditions de cuisson, dont la température peut être avantageusement abaissée à 1350 °C.

Les produits moulés à forte teneur en SiC proposés dans le cadre de la présente invention sont donc particulièrement utiles dans le domaine de la construction ou de l'aménagement (revêtement) de cuves électrolytiques pour la fabrication de l'aluminium.

De même, la composition de base selon l'invention peut également être utilisée comme matière première pour la fabrication d'objets réfractaires de toutes sortes (briques et autres revêtements thermiques...) qui peuvent être employés dans de nombreux et divers domaines techniques.

En particulier, les produits selon l'invention peuvent également être utilisés pour la fabrication d'incinérateurs, notamment d'ordures ménagères qui sont également particulièrement exposés à des composés chimiques agressifs formés lors de la combustion.

Bien entendu, l'invention n'est pas limitée aux modes de réalisation décrits. Des modifications restent possibles, notamment du point de vue de la constitution des divers éléments ou par substitution d'équivalents techniques, sans sortir pour autant du domaine de protection de l'invention.

## Revendications

1. Composition de base pour la fabrication de produits façonnés réfractaires à base de carbure de silicium SiC, **caractérisée en ce qu'**elle contient, en poids,
- de 4 % à 8 % d'une poudre de silicium métallique présentant une granulométrie inférieure à 10 µm, de préférence une granulométrie moyenne comprise entre 6 µm et 7 µm,
- au moins 3 % d'une poudre d'aluminium métallique présentant une granulométrie inférieure à 45 µm, et
- au moins 85 % d'une poudre de carbure de silicium α-SiC,
la somme de ces trois constituants représentant 100 %, la teneur globale en éventuelles impuretés étant au maximum de 0,5 % en poids.

2. Composition de base selon la revendication 1, **caractérisée en ce qu'**elle contient, en poids,
- 6 % d'une poudre de silicium métallique présentant une granulométrie inférieure à 10 µm,
- 3 % d'une poudre d'aluminium métallique présentant une granulométrie inférieure à 45 µm, et
- 91 % d'une poudre de carbure de silicium α-SiC, dont la granulométrie est répartie de la manière suivante, en poids :
- 38 % de α-SiC ayant une granulométrie comprise entre 1 mm (exclu) et 3 mm (inclus),
- 27 % de α-SiC ayant une granulométrie comprise entre 0,2 mm (exclu) et 1 mm (inclus), et
- 26 % de α-SiC ayant une granulométrie comprise entre 0 mm (exclu) et 0,2 mm (inclus).
la somme de ces trois constituants représentant 100 %, la teneur globale en éventuelles impuretés étant au maximum de 0,5 % en poids.

3. Procédé de fabrication d'un objet moulé réalisé à base de carbure de silicium, **caractérisé en ce qu'**il comprend essentiellement les étapes consistant à :
- mettre à disposition une composition de base poudreuse selon la revendication 1 ou 2,
- ajouter à ladite composition de base poudreuse, un composé liant carboné liquide susceptible de transformer le silicium métallique de ladite composition en carbure de silicium SiC, de préférence en β-SiC, lors du traitement thermique approprié subséquent, mélanger les composants et laisser reposer le mélange homogène obtenu jusqu'à l'obtention d'un mélange pâteux apte à être mis en forme ultérieurement par pressage,
- transférer ledit mélange pâteux dans un moule et presser progressivement ledit mélange sous une pression de pressage maximale comprise entre 500 et 1500 kg/cm², pour obtenir l'objet moulé souhaité, en procédant au moins à un premier dégazage lorsque la pression de pressage atteint 1/3 de la valeur de ladite pression maximale et à un second dégazage lorsque la pression de pressage atteint 2/3 de la valeur de ladite pression maximale,
- étuver l'objet pressé obtenu à une température comprise entre 150°C et 300 °C, pendant au moins 4 heures,
- soumettre l'objet étuvé à un traitement thermique sous atmosphère réductrice ou inerte à une température de 1 350 °C à 1 360 °C afin de transformer la totalité ou quasi-totalité du silicium métallique en SiC par réaction avec ledit composé carboné.

4. Procédé selon la revendication 3, **caractérisé en ce que** le composé liant carboné liquide est un mélange d'une résine phénolique liquide, de préférence une résine phénol-formaldéhyde de type connu sous la dénomination « novolaque » avec au moins un agent de réticulation dudit liant, de préférence de la hexaméthylène tétramine (HTMA).

5. Procédé selon la revendication 4, **caractérisé en ce que** l'on ajoute, en mélangeant dans un premier temps, une première résine phénolique liquide à ladite composition de base, puis dans un second temps le ou les agents de réticulation, éventuellement en mélange avec une seconde résine phénolique compatible ou identique à la première, tous deux sous forme de poudres solides, en poursuivant le mélange des différents composants.

6. Procédé selon la revendication 5, **caractérisé en ce que** la première résine phénolique est une résine connue sous la dénomination commerciale « PREFERE 88 5912R » et **en ce que** la seconde résine contenant l'agent de réticulation est connue sous la dénomination commerciale « PERACIT 8160R » toutes les deux étant distribuées par la société DYNEA ERKNER GmbH.

7. Procédé selon l'une quelconque des revendications 3 à 6, **caractérisé en ce que** la pression maximale de pressage est d'environ 1000 kg/cm² et **en ce que** l'objet moulé est étuvé pendant au moins 4 heures à une température comprise entre 150 °C et 170 °C avec une montée en température de 10 °C/heure.

8. Procédé selon l'une quelconque des revendications 3 à 7, **caractérisé en ce que** le traitement thermique se fait pendant au moins une heure à une température de 1360 °C et sous une atmosphère d'argon.

## Claims

1. Base composition for producing shaped refractory products based on silicon carbide SiC, **characterised in that** it contains by weight,
- 4 % to 8 % metal silicon powder with a granulometry of less than 10 µm, preferably an average granulometry of between 6 µm and 7 µm,
- at least 3 % metal aluminium powder with a granulometry of less than 45 µm and
- at least 85 % silicon carbide powder α-SiC,
the sum of the three constituents representing 100 %, the overall content of possible impurities being a maximum of 0.5 % by weight.

2. Base composition according to claim 1, **characterised in that** it contains by weight,
- 6 % metal silicon powder with a granulometry of less than 10 µm,
- 3 % metal aluminium powder with a granulometry of less than 45 µm and
- 91 % silicon carbide powder α-SiC, the granulometry of which is distributed in the following manner by weight:
- 38 % α-SiC with a granulometry of between 1 mm (exclusive) and 3 mm (inclusive),
- 27 % α-SiC with a granulometry of between 0.2 mm (exclusive) and 1 mm (inclusive), and
- 26 % α-SiC with a granulometry of between 0 mm (exclusive) and 0.2mm (inclusive),
the sum of the three constituents representing 100 %, the overall content of possible impurities being a maximum of 0.5 % by weight.

3. Method for producing a moulded object with a silicon carbide base, **characterised in that** it comprises essentially the steps of:
- providing a composition with a powdered base according to claim 1 or 2,
- adding to said composition with a powdered base, a liquid carbon binder compound capable of transforming the metal silicon of said composition into silicon carbide SiC, preferably into β-SiC, during the subsequent appropriate thermal treatment, mixing the components and leaving the homogenous mixture obtained to rest until a paste mixture is obtained which is capable of being shaped afterwards by pressing,
- transferring the said paste mixture into a mould and pressing said mixture progressively with a maximum pressure of between 500 and 1500 kg/cm², to obtain the desired moulded object, proceeding at least to a first degassing when the pressure reaches 1/3 of the value of said maximum pressure and to a second degassing when the pressure reaches 2/3 of the value of said maximum pressure,
- drying the obtained pressed object at a temperature of between 150°C and 300 °C, for at least 4 hours,
- subjecting the dried object to a thermal treatment in a reductive or inert atmosphere to a temperature of 1350 °C to 1360 °C in order to transform all or almost all of the metal silicon into SiC by reaction with said carbon compound.

4. Method according to claim 3, **characterised in that** the liquid carbon binder compound is a mixture of liquid phenolic resin, preferably a phenol formaldehyde resin of the type known as "novolaque", with at least one reticulation agent of the said binder, preferably hexamethylene tetramine (HTMA).

5. Method according to claim 4, **characterised in that** by mixing in a first period a first liquid phenolic resin is added to said base composition, then in a second period the reticulation agent or agents are added, possibly mixed with a second phenolic resin that is compatible with or identical to the first, both in the form of solid powders, while continuing to mix the different components.

6. Method according to claim 5, **characterised** that the first phenolic resin is a resin known under the trade name "PREFERE 88 5912R" and in that the second resin containing the reticulation agent is known under the trade name "PERACIT 8160R", both distributed by the company DYNEA ERKNER GmbH.

7. Method according to any one of claims 3 to 6, **characterised in that** the maximum pressure of the pressing is about 1000 kg/cm² and **in that** the moulded object is dried for at least 4 hours at a temperature of between 150°C and 170 °C with an increase in temperature of 10 °C/hour.

8. Method according to any one of claims 3 to 7, **characterised in that** thermal treatment is performed for at least one hour at a temperature of 1360 °C and in an argon atmosphere.

## Patentansprüche

1. Grundzusammensetzung für die Herstellung geformter refraktärer Produkte auf Basis von Siliciumcarbid, **dadurch gekennzeichnet, dass** sie Folgendes enthält, nach Gewicht,
- 4 % bis 8 % eines Siliciummetallpulvers, das eine Korngröße von weniger als 10 µm, vorzugsweise eine mittlere Korngröße im Bereich von 6 µm bis 7 µm, aufweist,
- mindestens 3 % eines Aluminiummetallpulvers, das eine Korngröße von weniger als 45 µm aufweist, und
- mindestens 85 % eines Pulvers aus Siliciumcarbid α-SiC,
wobei die Summe dieser drei Bestandteile 100 % ausmacht, wobei der Gesamtgehalt an möglicherweise vorhandenen Verunreinigungen höchstens 0,5 Gewichts% beträgt.

2. Grundzusammensetzung nach Anspruch 1, **dadurch gekennzeichnet, dass** sie Folgendes enthält, nach Gewicht,
- 6 % eines Siliciummetallpulvers, das eine Korngröße von weniger als 10 µm aufweist,
- 3 % eines Aluminiummetallpulvers, das eine Korngröße von weniger als 45 µm aufweist, und
- 91 % eines Pulvers aus Siliciumcarbid α-SiC, dessen Korngröße die folgenden Verteilung zeigt, nach Gewicht:
- 38 % an α-SiC mit einer Korngröße im Bereich von 1 mm (Grenzwert ausgeschlossen) bis 3 mm (einschließlich)
- 27 % an α-SiC mit einer Korngröße im Bereich von 0,2 mm (Grenzwert ausgeschlossen) bis 1 mm (einschließlich), und
- 26 % an α-SiC mit einer Korngröße im Bereich von 0 mm (Grenzwert ausgeschlossen) bis 0,2 mm (einschließlich).
wobei die Summe dieser drei Bestandteile 100 % ausmacht, wobei der Gesamtgehalt an möglicherweise vorhandenen Verunreinigungen höchstens 0,5 Gewichts% beträgt.

3. Verfahren zur Herstellung eines Formgegenstandes, der auf Grundlage von Siliciumcarbid gefertigt ist, **dadurch gekennzeichnet, dass** es im Wesentlichen die Schritte umfasst, welche sind :
- Bereitstellen einer pulverförmigen Grundzusammensetzung nach Anspruch 1 oder 2,
- Zusatz eines flüssigen kohlenstoffhaltigen Bindemittels, das geeignet ist, bei der nachfolgenden geeigneten Wärmebehandlung das Siliciummetall der Zusammensetzung in Siliciumcarbid SiC, vorzugsweise in β-SiC, umzuwandeln, zu der pulverförmigen Grundzusammensetzung, Mischen der Komponenten und Ruhenlassen der erhaltenen homogenen Mischung, bis eine pastöse Mischung vorliegt, die dazu geeignet ist, im weitere Verlauf durch Pressen geformt zu werden,
- Überführen der pastösen Mischung in eine Form und fortschreitendes Pressen der Mischung unter einem maximalen Pressdruck im Bereich von 500 bis 1.500 kg/cm², um den gewünschten Formgegenstand zu erhalten, wobei mindestens eine erste Entgasung vorgenommen wird, wenn der Pressdruck 1/3 des Wertes des maximalen Pressdrucks erreicht und eine zweite Entgasung, wenn der Pressdruck 2/3 des Wertes des maximalen Pressdrucks erreicht,
- Trocken des erhaltenen Pressgegenstandes, bei einer Temperatur im Bereich von 150 °C bis 300 °C, für eine Dauer von mindestens 4 Stunden,
- Den getrockneten Gegenstand einer Wärmebehandlung unter reduzierender oder inerter Atmosphäre Aussetzen, bei einer Temperatur von 1.350 °C bis 1.360 °C, um die Gesamtheit oder nahezu die Gesamtheit des Siliciummetalls durch Reaktion mit der kohlenstoffhaltigen Verbindung in SiC umzuwandeln.

4. Verfahren nach Anspruch 3, **dadurch gekennzeichnet, dass** es sich bei dem flüssigen kohlenstoffhaltigen Bindemittel um eine Mischung eines flüssigen Phenolharzes, vorzugsweise eines Phenol-Formalhdehyd-Harzes einer Art, die unter der Bezeichnung "Novolaque" bekannt ist, mit mindestens einem Mittel zur Vernetzung des Bindemittels, vorzugsweise Hexamethylentetramin (HTMA), handelt.

5. Verfahren nach Anspruch 4, **dadurch gekennzeichnet, dass** beim Mischen zunächst ein erstes flüssiges Phenolharz der Grundzusammensetzung zugesetzt wird und danach das oder die Vernetzungsmittel, insbesondere in Mischung mit einem zweiten Phenolharz, das mit dem ersten verträglich oder identisch ist, und zwar beide in Form pulverartiger Feststoffe zugesetzt werden, wobei der Mischvorgang der verschiedenen Komponenten fortgeführt wird.

6. Verfahren nach Anspruch 5, **dadurch gekennzeichnet, dass** es sich bei dem ersten Phenolharz um ein Harz handelt, das unter der Handelsbezeichnung "PREFERE 88 5912R" bekannt ist, und dass das zweite Harz, welches das Vernetzungsmittel enthält, unter der Handelsbezeichnung "PERACIT 8160R" bekannt ist, wobei beide von der Firma DYNEA ERKNER GmbH vertrieben werden.

7. Verfahren nach einem beliebigen der Ansprüche 3 bis 6, **dadurch gekennzeichnet, dass** der maximale Pressdruck ungefähr 1.000 kg/cm² beträgt und dass der Formgegenstand mindestens 4 Stunden lang bei einer Temperatur im Bereich von 150°C bis 170 °C getrocknet wird, mit einer Temperaturanstiegsrate von 10 °C/Stunde.

8. Verfahren nach einem beliebigen der Ansprüche 3 bis 7, **dadurch gekennzeichnet, dass** die Wärmebehandlung mindestens eine Stunde lang bei einer Temperatur von 1.360 °C und unter Argonatmosphäre erfolgt.
